(19) Europäisches Patentamt / European Patent Office / Office européen des brevets

(11) **EP 3 945 392 B1**

(12) **EUROPEAN PATENT SPECIFICATION**

(45) Date of publication and mention
of the grant of the patent:
**17.01.2024   Bulletin 2024/03**

(21) Application number: **20188902.9**

(22) Date of filing: **31.07.2020**

(51) International Patent Classification (IPC):
***G05D 1/02*** *(2020.01)*

(52) Cooperative Patent Classification (CPC):
**G05D 1/0212**

(54) **A WHEELED MOBILE ROBOT CONTROLLER COMPENSATION SYSTEM AND METHOD**

SYSTEM UND VERFAHREN ZUR KOMPENSATION DER STEUERUNG EINES MOBILEN ROBOTERS AUF RÄDERN

SYSTÈME ET PROCÉDÉ DE COMPENSATION D'ORGANE DE COMMANDE DE ROBOT MOBILE À ROUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.02.2022   Bulletin 2022/05**

(73) Proprietor: **Continental Automotive Technologies
GmbH
30165 Hannover (DE)**

(72) Inventor: **Ma, Yingchong
Singapore 339780 (SG)**

(74) Representative: **Continental Corporation
c/o Continental Teves AG & Co. OHG
Intellectual Property
Guerickestraße 7
60488 Frankfurt a. Main (DE)**

(56) References cited:
**US-A- 4 718 685          US-A1- 2007 213 902
US-A1- 2018 088 582**

**Description**

FIELD OF THE INVENTION

The invention relates to a wheeled mobile robot controller compensation system and a corresponding wheeled mobile robot controller compensation method.

BACKGROUND

A wheeled mobile robot is a machine comprising at least one wheel for moving the machine from an initial location to a destination location. A wheeled mobile robot may be controlled to move autonomously by a wheeled mobile robot controller operatively connected to the wheeled mobile robot. The wheeled mobile robot controller may attempt to control the wheeled mobile robot to move, for instance, according to a path profile, a speed profile or a combination of both profiles. However, parameters of the wheeled mobile robot controller have to be tuned before the wheeled mobile robot controller may be used to control the wheeled mobile robot, and be continually tuned, for example, as operating conditions change.

Conventional wheeled mobile robot controller compensation systems are known from documents US 2018/088582 A1, US 4 718 685 A and US 2007/213902 A1.

SUMMARY

The present invention is defined by the appended set of claims.

An objective is to provide a wheeled mobile robot controller compensation system or method that ameliorates the problems of the prior art.

According to a first aspect of the present disclosure, there is provided a wheeled mobile robot controller compensation system comprising: a compensator signal receiver configured to receive a wheeled mobile robot input signal; a compensator signal determiner configured to determine a controller output compensation signal, by taking into account the wheeled mobile robot input signal, in order to compensate for environmental and systemic effects affecting motion control of a wheeled mobile robot; and a compensator signal emitter configured to emit the controller output compensation signal in order to refine a wheeled mobile robot controller output signal.

As used in this summary, in the description below, in the claims below, and in the accompanying drawings, the term "effect" means a change produced. Hence, an environmental effect refers to a change caused by the environment of a wheeled mobile robot, or a change caused by something external to the wheeled mobile robot. An environmental effect may, for example, be caused by wind blowing on the wheeled mobile robot, a slope on which the wheeled mobile robot is travelling, rain falling onto the wheeled mobile robot or the wheeled mobile robot controller. Moreover, a systemic effect refers to a change caused by something internal to or within the wheeled mobile robot itself. A systemic effect may, for example, be caused by friction between moving parts within the wheeled mobile robot.

The wheeled mobile robot controller compensation system may be operatively connected to both a wheeled mobile robot controller and a wheeled mobile robot, in order to refine a wheeled mobile robot controller output signal. The wheeled mobile robot controller compensation system may be operatively connected in between the wheeled mobile robot controller and the wheeled mobile robot, and thus be an interface between the wheeled mobile robot controller and the wheeled mobile robot.

The wheeled mobile robot controller compensation system receives a wheeled mobile robot input signal in order to determine an accurate controller output compensation signal in order to effectively control the motion of a wheeled mobile robot. The wheeled mobile robot controller compensation system determines an appropriate controller output compensation signal to compensate for environmental and systemic effects. Furthermore, the wheeled mobile robot controller compensation system also determines an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot.

The compensator signal receiver is configured to receive a wheeled mobile robot output signal from the wheeled mobile robot. Thus, advantageously, a closed-loop feedback may be provided to improve the wheeled mobile robot controller compensation system.

Optionally, the compensator signal determiner is configured to determine the controller output compensation signal, by also taking into account the wheeled mobile robot output signal, in order to compensate for environmental and systemic effects affecting motion control of the wheeled mobile robot.

The wheeled mobile robot controller compensation system may receive a wheeled mobile robot output signal in order to determine an accurate controller output compensation signal in order to effectively control the motion of a wheeled mobile robot. The wheeled mobile robot controller compensation system may determine an appropriate controller output compensation signal to compensate for environmental and systemic effects. Furthermore, the wheeled mobile robot controller compensation system may also determine an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Moreover, advantageously, a closed-loop feedback may be provided to improve the wheeled mobile robot controller compensation system.

Optionally, the compensator signal determiner is configured to determine the controller output compensation signal using an equation comprising an integral function of the wheeled mobile robot output signal.

The wheeled mobile robot controller compensation system may receive a wheeled mobile robot output signal in order to determine an accurate controller output compensation signal in order to effectively control the motion of a wheeled mobile robot. The wheeled mobile robot controller compensation system may determine an appropriate controller output compensation signal to compensate for environmental and systemic effects. Furthermore, the wheeled mobile robot controller compensation system may also determine an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Moreover, advantageously, a closed-loop feedback may be provided to improve the wheeled mobile robot controller compensation system. Further, the compensator signal determiner may determine the controller output compensation signal in real time because a calculation involving an integral function may be performed rapidly.

Optionally, the compensator signal determiner is configured to determine the controller output compensation signal using an equation comprising an integral function of the wheeled mobile robot input signal.

The wheeled mobile robot controller compensation system may receive a wheeled mobile robot input signal in order to determine an accurate controller output compensation signal in order to effectively control the motion of a wheeled mobile robot. The wheeled mobile robot controller compensation system may determine an appropriate controller output compensation signal to compensate for environmental and systemic effects. Furthermore, the wheeled mobile robot controller compensation system may also determine an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Further, the compensator signal determiner may determine the controller output compensation signal in real time because a calculation involving an integral function may be performed rapidly.

Optionally, the compensator signal determiner is configured to determine the controller output compensation signal by subtracting an integral function of the wheeled mobile robot input signal from an integral function of the wheeled mobile robot output signal.

The wheeled mobile robot controller compensation system may receive a wheeled mobile robot output signal and a wheeled mobile robot input signal in order to determine an accurate controller output compensation signal in order to effectively control the motion of a wheeled mobile robot. The wheeled mobile robot controller compensation system may determine an appropriate controller output compensation signal to compensate for environmental and systemic effects. Furthermore, the wheeled mobile robot controller compensation system may also determine an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Moreover, advantageously, a closed-loop feedback may be provided to improve the wheeled mobile robot controller compensation system. Further, the compensator signal determiner may determine the controller output compensation signal in real time because a calculation involving integral functions may be performed rapidly.

The wheeled mobile robot controller compensation system may further comprise an identifier signal receiver configured to receive the wheeled mobile robot output signal from the wheeled mobile robot.

Optionally, the identifier signal receiver is also configured to receive the wheeled mobile robot input signal.

The wheeled mobile robot controller compensation system further comprises a wheeled mobile robot type identifier configured to identify of which wheeled mobile robot type is the wheeled mobile robot, by taking into account the wheeled mobile robot output signal.

Generally, there are five types of wheeled mobile robot. A wheeled mobile robot may be classified under any one of these five types of wheeled mobile robot. Thus, advantageously, the wheeled mobile robot controller compensation system identifies of which wheeled mobile robot type is the wheeled mobile robot.

The wheeled mobile robot controller compensation system further comprises a wheeled mobile robot type identifier configured to identify of which wheeled mobile robot type is the wheeled mobile robot, by also taking into account the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation system identifies of which wheeled mobile robot type is the wheeled mobile robot.

Optionally, the wheeled mobile robot type identifier is configured to identify of which wheeled mobile robot type is the wheeled mobile robot, by calculating a residual value using a residual function from information from the wheeled mobile robot output signal and the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation system may identify of which wheeled mobile robot type is the wheeled mobile robot. Moreover, the wheeled mobile robot type identifier may identify in real time of which wheeled mobile robot type is the wheeled mobile robot because calculating a residual value using a residual function may be performed rapidly.

Optionally, the wheeled mobile robot type identifier is configured to identify of which wheeled mobile robot type is the wheeled mobile robot, by calculating a residual value using an integral function of a residual function from information from the wheeled mobile robot output signal and the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation system may identify of which wheeled mobile robot type is the wheeled mobile robot. Moreover, the wheeled mobile robot type identifier may identify in real time of which wheeled mobile robot type is the wheeled mobile robot because calculating a residual value using a residual function may be performed rapidly.

The wheeled mobile robot controller compensation system further comprises an identifier signal emitter configured to emit a wheeled mobile robot type signal comprising information that corresponds to the wheeled mobile robot type of the wheeled mobile robot identified.

The compensator signal receiver is configured to receive the wheeled mobile robot type signal.

The compensator signal determiner is configured to determine the controller output compensation signal, by also taking into account the wheeled mobile robot type signal, in order to compensate for environmental and systemic effects affecting motion control of the wheeled mobile robot.

The wheeled mobile robot controller compensation system receives a wheeled mobile robot type signal in order to determine an accurate controller output compensation signal in order to effectively control the motion of a wheeled mobile robot. Generally, there are five types of wheeled mobile robot. A wheeled mobile robot may be classified under any one of these five types of wheeled mobile robot. Furthermore, the wheeled mobile robot controller compensation system also determines an appropriate controller output compensation signal that may be used to control the motion of a wheeled mobile robot, regardless of which wheeled mobile robot type is the wheeled mobile robot. The wheeled mobile robot controller compensation system may thus be a plug-and-play wheeled mobile robot controller compensation system suitable to be used with a wheeled mobile robot, regardless of which wheeled mobile robot type is the wheeled mobile robot.

The wheeled mobile robot controller compensation system may further comprise a controller output signal refiner receiver configured to receive the controller output compensation signal from the compensator signal emitter.

The wheeled mobile robot controller compensation system may further comprise a controller output signal refiner determiner configured to determine the wheeled mobile robot input signal, by taking into account the controller output compensation signal from the compensator signal emitter, in order to compensate for environmental and systemic effects affecting motion control of the wheeled mobile robot.

The wheeled mobile robot controller compensation system may receive a controller output compensation signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Furthermore, the wheeled mobile robot controller compensation system may also determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot.

The wheeled mobile robot controller compensation system may thus be a plug-and-play wheeled mobile robot controller compensation system suitable to be used with a wheeled mobile robot controller that has not been specifically tuned to control the motion of a wheeled mobile robot.

The wheeled mobile robot controller compensation system may further comprise a controller output signal refiner receiver configured to receive the wheeled mobile robot type signal from the identifier signal emitter.

The wheeled mobile robot controller compensation system may further comprise a controller output signal refiner determiner configured to determine the wheeled mobile robot input signal, by taking into account the wheeled mobile robot type signal from the identifier signal emitter, in order to compensate for environmental and systemic effects affecting motion control of the wheeled mobile robot.

The wheeled mobile robot controller compensation system may receive a wheeled mobile robot type signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Generally, there are five types of wheeled mobile robot. A wheeled mobile robot may be classified under any one of these five types of wheeled mobile robot. Furthermore, the wheeled mobile robot controller compensation system may also determine an appropriate wheeled mobile robot input signal that may be used to control the motion of a wheeled mobile robot, regardless of which wheeled mobile robot type is the wheeled mobile robot. The wheeled mobile robot controller compensation system may thus be a plug-and-play wheeled mobile robot controller compensation system suitable to be used with a wheeled mobile robot, regardless of which wheeled mobile robot type is the wheeled mobile robot.

The wheeled mobile robot controller compensation system may further comprise a controller output signal refiner receiver configured to receive the wheeled mobile robot controller output signal from a wheeled mobile robot controller.

The wheeled mobile robot controller compensation system may further comprise a controller output signal refiner determiner configured to determine the wheeled mobile robot input signal, by taking into account the wheeled mobile robot controller output signal from a wheeled mobile robot controller, in order to compensate for environmental and systemic effects affecting motion control of the wheeled mobile robot.

The wheeled mobile robot controller compensation system may receive a wheeled mobile robot controller output signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Furthermore, the wheeled mobile robot controller compensation system may also determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot.

The wheeled mobile robot controller compensation system may further comprise a controller output signal refiner receiver configured to receive at least one of the controller output compensation signal from the compensator signal emitter, the wheeled mobile robot type signal from the identifier signal emitter or the wheeled mobile robot controller output signal from a wheeled mobile robot controller.

The wheeled mobile robot controller compensation system may further comprise a controller output signal refiner determiner configured to determine the wheeled mobile robot input signal, by taking into account the at least one of the controller output compensation signal from the compensator signal emitter, the wheeled mobile robot type signal from the identifier signal emitter or the wheeled mobile robot controller output signal from the wheeled mobile robot controller.

The wheeled mobile robot controller compensation system may receive at least one of a controller output compensation signal, a wheeled mobile robot type signal or a wheeled mobile robot controller output signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Furthermore, the wheeled mobile robot controller compensation system may also determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. In addition, the wheeled mobile robot controller compensation system may also determine an appropriate wheeled mobile robot input signal that may be used to control the motion of a wheeled mobile robot, regardless of which wheeled mobile robot type is the wheeled mobile robot. The wheeled mobile robot controller compensation system may thus be a plug-and-play wheeled mobile robot controller compensation system suitable to be used with a wheeled mobile robot, regardless of which wheeled mobile robot type is the wheeled mobile robot.

The wheeled mobile robot controller compensation system may further comprise a controller output signal refiner receiver configured to receive the controller output compensation signal from the compensator signal emitter, the wheeled mobile robot type signal from the identifier signal emitter and the wheeled mobile robot controller output signal from a wheeled mobile robot controller.

The wheeled mobile robot controller compensation system may further comprise a controller output signal refiner determiner configured to determine the wheeled mobile robot input signal, by taking into account the controller output compensation signal from the compensator signal emitter, the wheeled mobile robot type signal from the identifier signal emitter and the wheeled mobile robot controller output signal from a wheeled mobile robot controller.

The wheeled mobile robot controller compensation system may receive a controller output compensation signal, a wheeled mobile robot type signal and a wheeled mobile robot controller output signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Furthermore, the wheeled mobile robot controller compensation system may also determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. In addition, the wheeled mobile robot controller compensation system may also determine an appropriate wheeled mobile robot input signal that may be used to control the motion of a wheeled mobile robot, regardless of which wheeled mobile robot type is the wheeled mobile robot. The wheeled mobile robot controller compensation system may thus be a plug-and-play wheeled mobile robot controller compensation system suitable to be used with a wheeled mobile robot, regardless of which wheeled mobile robot type is the wheeled mobile robot.

The wheeled mobile robot controller compensation system may further comprise a controller output signal refiner emitter configured to emit the wheeled mobile robot input signal.

Optionally, the wheeled mobile robot may comprise the wheeled mobile robot controller compensation system.

Any feature or step disclosed in the context of the first aspect of the present disclosure may also be used, to the extent possible, in combination with and/or in the context of other aspects of the present disclosure, and in the disclosure generally. In addition, any feature or step disclosed in the context of any other aspect of the present disclosure may also be used, to the extent possible, in combination with and/or in the context of the first aspect of the present disclosure, and in the disclosure generally.

According to a second aspect of the present disclosure, there is provided a wheeled mobile robot controller compensation system comprising: a compensator signal receiver configured to receive a wheeled mobile robot input signal and a wheeled mobile robot output signal from a wheeled mobile robot; a wheeled mobile robot type identifier configured to identify of which wheeled mobile robot type is the wheeled mobile robot, by taking into account the wheeled mobile robot output signal and the wheeled mobile robot input signal; wherein the wheeled mobile robot type identifier is configured to identify of which wheeled mobile robot type is the wheeled mobile robot, by: calculating a residual value using a residual function from information from the wheeled mobile robot output signal and the wheeled mobile robot input signal; or calculating a residual value using an integral function of the residual function from the information from the wheeled mobile robot output signal and the wheeled mobile robot input signal; an identifier signal emitter configured to emit a wheeled mobile robot type signal comprising information that corresponds to the wheeled mobile robot type of the wheeled mobile robot identified; a compensator signal determiner configured to determine a controller output compensation signal, by taking into account the wheeled mobile robot input signal, the wheeled mobile robot output signal and the wheeled mobile robot type signal, in order to compensate for environmental and systemic effects affecting motion control of the wheeled mobile robot; wherein the compensator signal determiner is configured to determine the controller output compensation signal by subtracting an integral function of the wheeled mobile robot input signal from an integral function of the wheeled mobile robot output signal; a compensator signal emitter configured to emit the controller output compensation signal in order to refine a wheeled mobile robot controller output signal; a controller output signal refiner determiner configured to determine the wheeled mobile robot input signal, by taking into account the at least one of the controller output compensation signal from the compensator signal emitter, the wheeled mobile robot type signal from the identifier signal emitter or the wheeled mobile robot controller output signal from a wheeled mobile robot controller; and a controller output signal refiner emitter configured to emit the wheeled mobile robot input signal.

The wheeled mobile robot controller compensation system may receive a controller output compensation signal, a wheeled mobile robot type signal and a wheeled mobile robot controller output signal in order to determine an accurate wheeled mobile robot input signal in order to effectively control the motion of a wheeled mobile robot. The wheeled mobile robot controller compensation system may determine an appropriate wheeled mobile robot input signal to compensate for environmental and systemic effects. Furthermore, the wheeled mobile robot controller compensation system may also determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system may thus be a plug-and-play wheeled mobile robot controller compensation system suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. In addition, the wheeled mobile robot controller compensation system may also determine an appropriate wheeled mobile robot input signal that may be used to control the motion of a wheeled mobile robot, regardless of which wheeled mobile robot type is the wheeled mobile robot. The wheeled mobile robot controller compensation system may thus be a plug-and-play wheeled mobile robot controller compensation system suitable to be used with a wheeled mobile robot, regardless of which wheeled mobile robot type is the wheeled mobile robot.

Any feature or step disclosed in the context of the second aspect of the present disclosure may also be used, to the extent possible, in combination with and/or in the context of other aspects of the present disclosure, and in the disclosure generally. In addition, any feature or step disclosed in the context of any other aspect of the present disclosure may also be used, to the extent possible, in combination with and/or in the context of the second aspect of the present disclosure, and in the disclosure generally.

According to a third aspect of the present disclosure, there is provided a wheeled mobile robot controller compensation method comprising the acts of: receiving a wheeled mobile robot input signal; determining a controller output compensation signal, by taking into account the wheeled mobile robot input signal, in order to compensate for environmental and systemic effects affecting motion control of a wheeled mobile robot; and emitting the controller output compensation signal in order to refine a wheeled mobile robot controller output signal.

An accurate controller output compensation signal is determined by receiving a wheeled mobile robot input signal, and thus motion control of a wheeled mobile robot may be performed effectively. An appropriate controller output compensation signal is determined to compensate for environmental and systemic effects. An appropriate controller output compensation signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot.

The wheeled mobile robot controller compensation method further comprises the act of receiving a wheeled mobile robot output signal from the wheeled mobile robot.

Optionally, the act of determining the controller output compensation signal comprises the act of determining the controller output compensation signal, by also taking into account the wheeled mobile robot output signal, in order to compensate for environmental and systemic effects affecting motion control of the wheeled mobile robot.

An accurate controller output compensation signal may be determined by receiving a wheeled mobile robot output signal, and thus motion control of a wheeled mobile robot may be performed effectively. An appropriate controller output compensation signal may be determined to compensate for environmental and systemic effects. An appropriate controller output compensation signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Moreover, advantageously, by also taking into account the wheeled mobile robot output signal, a closed-loop feedback may be provided to improve the wheeled mobile robot controller compensation method.

Optionally, the act of determining the controller output compensation signal comprises the act of determining the controller output compensation signal using an equation comprising an integral function of the wheeled mobile robot output signal.

An accurate controller output compensation signal may be determined by receiving a wheeled mobile robot output signal, and thus motion control of a wheeled mobile robot may be performed effectively. An appropriate controller output compensation signal may be determined to compensate for environmental and systemic effects. An appropriate controller output compensation signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Moreover, advantageously, by also taking into account the wheeled mobile robot output signal, a closed-loop feedback may be provided to improve the wheeled mobile robot controller compensation method. Further, the controller output compensation signal may be determined in real time because a calculation involving an integral function may be performed rapidly.

Optionally, the act of determining the controller output compensation signal comprises the act of determining the controller output compensation signal using an equation comprising an integral function of the wheeled mobile robot input signal.

An accurate controller output compensation signal may be determined by receiving a wheeled mobile robot input signal, and thus motion control of a wheeled mobile robot may be performed effectively. An appropriate controller output compensation signal may be determined to compensate for environmental and systemic effects. An appropriate controller output compensation signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Further, the controller output compensation signal may be determined in real time because a calculation involving an integral function may be performed rapidly.

Optionally, the act of determining the controller output compensation signal comprises the act of determining the controller output compensation signal by subtracting an integral function of the wheeled mobile robot input signal from an integral function of the wheeled mobile robot output signal.

An accurate controller output compensation signal may be determined by receiving a wheeled mobile robot input signal and a wheeled mobile robot output signal, and thus motion control of a wheeled mobile robot may be performed effectively. An appropriate controller output compensation signal may be determined to compensate for environmental and systemic effects. An appropriate controller output compensation signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Moreover, advantageously, by also taking into account the wheeled mobile robot output signal, a closed-loop feedback may be provided to improve the wheeled mobile robot controller compensation method. Further, the controller output compensation signal may be determined in real time because a calculation involving integral functions may be performed rapidly.

The wheeled mobile robot controller compensation method further comprises the act of identifying of which wheeled mobile robot type is the wheeled mobile robot, by taking into account the wheeled mobile robot output signal.

Generally, there are five types of wheeled mobile robot. A wheeled mobile robot may be classified under any one of these five types of wheeled mobile robot. Thus, advantageously, the wheeled mobile robot controller compensation method may be used to identify of which wheeled mobile robot type is the wheeled mobile robot.

The wheeled mobile robot controller compensation method further comprises the act of identifying of which wheeled mobile robot type is the wheeled mobile robot, by taking into account the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation method may be used to identify of which wheeled mobile robot type is the wheeled mobile robot.

Optionally, the act of identifying of which wheeled mobile robot type is the wheeled mobile robot comprises the act of calculating a residual value using a residual function from information from the wheeled mobile robot output signal and the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation method may be used to identify of which wheeled mobile robot type is the wheeled mobile robot. Moreover, the act of identifying of which wheeled mobile robot type is the wheeled mobile robot may be performed in real time because calculating a residual value using a residual function may be performed rapidly.

Optionally, the act of identifying of which wheeled mobile robot type is the wheeled mobile robot comprises the act of calculating a residual value using an integral function of a residual function from information from the wheeled mobile robot output signal and the wheeled mobile robot input signal.

Generally, there are five types of wheeled mobile robot. A wheeled mobile robot may be classified under any one of these five types of wheeled mobile robot. Thus, advantageously, the wheeled mobile robot controller compensation method may be used to identify of which wheeled mobile robot type is the wheeled mobile robot. Moreover, the act of identifying of which wheeled mobile robot type is the wheeled mobile robot may be performed in real time because calculating a residual value using an integral function of a residual function may be performed rapidly.

The wheeled mobile robot controller compensation method further comprises the act of emitting a wheeled mobile robot type signal comprising information that corresponds to the wheeled mobile robot type of the wheeled mobile robot identified.

The wheeled mobile robot controller compensation method may further comprise the act of receiving the wheeled mobile robot type signal.

The act of determining the controller output compensation signal comprises the act of determining the controller output compensation signal, by also taking into account the wheeled mobile robot type signal, in order to compensate for environmental and systemic effects affecting motion control of the wheeled mobile robot.

An accurate controller output compensation signal is determined by receiving a wheeled mobile robot type signal, and thus motion control of a wheeled mobile robot may be performed effectively. Generally, there are five types of wheeled mobile robot. A wheeled mobile robot may be classified under any one of these five types of wheeled mobile robot. An appropriate controller output compensation signal that may be determined in order to control the motion of a wheeled mobile robot, regardless of which wheeled mobile robot type is the wheeled mobile robot.

The wheeled mobile robot controller compensation method may further comprise the act of refining the wheeled mobile robot controller output signal.

An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. An appropriate wheeled mobile robot input signal may be determined to control the motion of a wheeled mobile robot, regardless of which wheeled mobile robot type is the wheeled mobile robot. Hence, the wheeled mobile robot controller compensation method may be suitable to be used with any one of these five types of wheeled mobile robot.

Optionally, the act of refining the wheeled mobile robot controller output signal comprises the act of receiving the controller output compensation signal.

Optionally, the act of refining the wheeled mobile robot controller output signal further comprises the act of determining the wheeled mobile robot input signal, by taking into account the controller output compensation signal, in order to compensate for environmental and systemic effects affecting motion control of the wheeled mobile robot.

An accurate wheeled mobile robot input signal may be determined by receiving a controller output compensation signal, and thus motion control of a wheeled mobile robot may be performed effectively. An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot.

Optionally, the act of refining the wheeled mobile robot controller output signal comprises the act of receiving the wheeled mobile robot type signal.

Optionally, the act of refining the wheeled mobile robot controller output signal further comprises the act of determining the wheeled mobile robot input signal, by taking into account the wheeled mobile robot type signal, in order to compensate for environmental and systemic effects affecting motion control of the wheeled mobile robot.

An accurate wheeled mobile robot input signal may be determined by receiving a wheeled mobile robot type signal, and thus motion control of a wheeled mobile robot may be performed effectively. Generally, there are five types of wheeled mobile robot. A wheeled mobile robot may be classified under any one of these five types of wheeled mobile robot. An appropriate wheeled mobile robot input signal may be determined to control the motion of a wheeled mobile robot, regardless of which wheeled mobile robot type is the wheeled mobile robot. Hence, the wheeled mobile robot controller compensation method may be suitable to be used with any one of these five types of wheeled mobile robot.

Optionally, the act of refining the wheeled mobile robot controller output signal comprises the act of receiving the wheeled mobile robot controller output signal from a wheeled mobile robot controller.

Optionally, the act of refining the wheeled mobile robot controller output signal further comprises the act of determining the wheeled mobile robot input signal, by taking into account the wheeled mobile robot controller output signal from the wheeled mobile robot controller, in order to compensate for environmental and systemic effects affecting motion control of the wheeled mobile robot.

An accurate wheeled mobile robot input signal may be determined by receiving a wheeled mobile robot controller output signal, and thus motion control of a wheeled mobile robot may be performed effectively. An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot.

Optionally, the act of refining the wheeled mobile robot controller output signal comprises the act of receiving at least one of the controller output compensation signal, the wheeled mobile robot type signal or the wheeled mobile robot controller output signal from a wheeled mobile robot controller.

Optionally, the act of refining the wheeled mobile robot controller output signal further comprises the act of determining the wheeled mobile robot input signal, by taking into account the at least one of the controller output compensation signal, the wheeled mobile robot type signal or the wheeled mobile robot controller output signal from the wheeled mobile robot controller, in order to compensate for environmental and systemic effects affecting motion control of the wheeled mobile robot.

An accurate wheeled mobile robot input signal may be determined by receiving at least one of a wheeled mobile robot controller output signal, a wheeled mobile robot type signal or controller output compensation signal, and thus motion control of a wheeled mobile robot may be performed effectively. An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. An appropriate wheeled mobile robot input signal may be determined to control the motion of a wheeled mobile robot, regardless of which wheeled mobile robot type is the wheeled mobile robot. Hence, the wheeled mobile robot controller compensation method may be suitable to be used with any one of these five types of wheeled mobile robot.

Optionally, the act of refining the wheeled mobile robot controller output signal comprises the act of receiving the controller output compensation signal, the wheeled mobile robot type signal and the wheeled mobile robot controller output signal from a wheeled mobile robot controller.

Optionally, the act of refining the wheeled mobile robot controller output signal further comprises the act of determining the wheeled mobile robot input signal, by taking into account the controller output compensation signal, the wheeled mobile robot type signal and the wheeled mobile robot controller output signal from the wheeled mobile robot controller, in order to compensate for environmental and systemic effects affecting motion control of the wheeled mobile robot.

An accurate wheeled mobile robot input signal may be determined by receiving a wheeled mobile robot controller output signal, a wheeled mobile robot type signal and controller output compensation signal, and thus motion control of a wheeled mobile robot may be performed effectively. An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. An appropriate wheeled mobile robot input signal may be determined to control the motion of a wheeled mobile robot, regardless of which wheeled mobile robot type is the wheeled mobile robot. Hence, the wheeled mobile robot controller compensation method may be suitable to be used with any one of these five types of wheeled mobile robot.

Optionally, the act of refining the wheeled mobile robot controller output signal further comprises the act of emitting the wheeled mobile robot input signal.

Any feature or step disclosed in the context of the third aspect of the present disclosure may also be used, to the extent possible, in combination with and/or in the context of other aspects of the present disclosure, and in the disclosure generally. In addition, any feature or step disclosed in the context of any other aspect of the present disclosure may also be used, to the extent possible, in combination with and/or in the context of the third aspect of the present disclosure, and in the disclosure generally.

According to a fourth aspect of the present disclosure, there is provided a wheeled mobile robot controller compensation method comprising the acts of: receiving a wheeled mobile robot input signal; receiving a wheeled mobile robot output signal from a wheeled mobile robot; identifying of which wheeled mobile robot type is the wheeled mobile robot, by taking into account the wheeled mobile robot output signal and the wheeled mobile robot input signal; wherein the act of identifying of which wheeled mobile robot type is the wheeled mobile robot comprises the act of: calculating a residual value using a residual function from information from the wheeled mobile robot output signal and the wheeled mobile robot input signal; or calculating a residual value using an integral function of the residual function from the information from the wheeled mobile robot output signal and the wheeled mobile robot input signal; emitting a wheeled mobile robot type signal comprising information that corresponds to the wheeled mobile robot type of the wheeled mobile robot identified; determining a controller output compensation signal, by taking into account the wheeled mobile robot input signal, the wheeled mobile robot output signal and the wheeled mobile robot type signal, in order to compensate for environmental and systemic effects affecting motion control of the wheeled mobile robot; wherein the act of determining the controller output compensation signal comprises the act of determining the controller output compensation signal by subtracting an integral function of the wheeled mobile robot input signal from an integral function of the wheeled mobile robot output signal; emitting the controller output compensation signal in order to refine a wheeled mobile robot controller output signal; and refining the wheeled mobile robot controller output signal, wherein the act of refining the wheeled mobile robot controller output signal comprises the acts of: determining the wheeled mobile robot input signal, by taking into account the controller output compensation signal, the wheeled mobile robot type signal and the wheeled mobile robot controller output signal, in order to compensate for environmental and systemic effects affecting motion control of the wheeled mobile robot; and emitting the wheeled mobile robot input signal.

An accurate wheeled mobile robot input signal may be determined by receiving a wheeled mobile robot input signal, and thus motion control of a wheeled mobile robot may be performed effectively. An appropriate wheeled mobile robot input signal may be determined to compensate for environmental and systemic effects. An appropriate wheeled mobile robot input signal may also be determined to complement or refine a wheeled mobile robot controller output signal from a wheeled mobile robot controller, and thus parameters of the wheeled mobile robot controller may not need to be tuned or adjusted in order to control the motion of a wheeled mobile robot. Hence, the wheeled mobile robot controller compensation method may be suitable to be used with a wheeled mobile robot controller that has not been specifically tuned to control the motion of a wheeled mobile robot. Generally, there are five types of wheeled mobile robot. A wheeled mobile robot may be classified under any one of these five types of wheeled mobile robot. An appropriate wheeled mobile robot input signal may be determined to control the motion of a wheeled mobile robot, regardless of which wheeled mobile robot type is the wheeled mobile robot. Hence, the wheeled mobile robot controller compensation method may be suitable to be used with any one of these five types of wheeled mobile robot.

Any feature or step disclosed in the context of the fourth aspect of the present disclosure may also be used, to the extent possible, in combination with and/or in the context of other aspects of the present disclosure, and in the disclosure generally. In addition, any feature or step disclosed in the context of any other aspect of the present disclosure may also be used, to the extent possible, in combination with and/or in the context of the fourth aspect of the present disclosure, and in the disclosure generally.

In this summary, in the description below, in the claims below, and in the accompanying drawings, reference is made to particular features (including method steps) of the present disclosure. It is to be understood that the disclosure of the present disclosure in this specification includes all possible combinations of such particular features. For example, where a particular feature is disclosed in the context of a particular aspect or embodiment of the present disclosure, or a particular claim, that feature can also be used, to the extent possible, in combination with and/or in the context of other particular aspects and embodiments of the present disclosure, and in the disclosure generally.

In this summary, in the description below, in the claims below, and in the accompanying drawings, where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

As used in this summary, in the description below, in the claims below, and in the accompanying drawings, the term "comprises" and grammatical equivalents thereof are used herein to mean that other components, ingredients, steps, et cetera are optionally present. For example, an article "comprising" (or "which comprises") components A, B, and C can consist of (that is, contain only) components A, B, and C, or can contain not only components A B, and C but also one or more other components.

As used in this summary, in the description below, in the claims below, and in the accompanying drawings, the term "at least" followed by a number is used in to denote the start of a range beginning with that number (which may be a range having an upper limit or no upper limit, depending on the variable being defined) . For example, "at least 1" means 1 or more than 1. The term "at most" followed by a number is used herein to denote the end of a range ending with that number (which may be a range having 1 or 0 as its lower limit, or a range having no lower limit, depending on the variable being defined) . For example, "at most 4" means 4 or less than 4, and "at most 40%" means 40% or less than 40%. When, in this specification, a range is given as "(a first number) to (a second number)" or "(a first number) - (a second number) ", this means a range whose lower limit is the first number and whose upper limit is the second number. For example, 25 to 100 mm means a range whose lower limit is 25 mm, and whose upper limit is 100 mm.

As used in this summary, in the description below, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

BRIEF DESCRIPTION OF THE DRAWINGS

These and other features, aspects, and advantages will become better understood with regard to the following description, appended claims, and accompanying drawings where:

Figure 1 shows a wheeled mobile robot controller compensation system;
Figure 2 shows a wheeled mobile robot comprising the wheeled mobile robot controller compensation system of Figure 1;
Figure 3 shows a schematic diagram of the wheeled mobile robot controller compensation system of Figure 1 operatively connected to a wheeled mobile robot and a wheeled mobile robot controller;
Figure 4 shows another schematic diagram of the wheeled mobile robot controller compensation system of Figure 1 operatively connected to a wheeled mobile robot and a wheeled mobile robot controller;
Figure 5 a schematic diagram of the wheeled mobile robot controller compensation system of Figure 1 operatively connected to a wheeled mobile robot; and
Figure 6 a diagram for a wheeled mobile robot controller compensation method.

In the drawings, like parts are denoted by like reference numerals.

DESCRIPTION

In the summary above, in this description, in the claims below, and in the accompanying drawings, reference is made to particular features (including method steps) of the present disclosure. It is to be understood that the disclosure of the present disclosure in this specification includes all possible combinations of such particular features. For example, where a particular feature is disclosed in the context of a particular aspect or embodiment of the present disclosure, or a particular claim, that feature can also be used, to the extent possible, in combination with and/or in the context of other particular aspects and embodiments of the present disclosure, and in the disclosure generally.

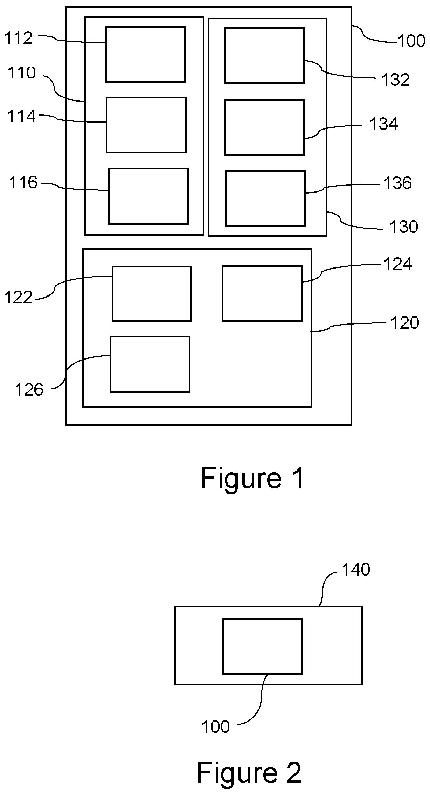

Figure 1 shows a wheeled mobile robot controller compensation system 100 comprising an identifier 110, a compensator 120, and a controller output signal refiner 130.

The identifier 110 comprises an identifier signal receiver 112, a wheeled mobile robot type identifier 114 and an identifier signal emitter 116.

The identifier signal receiver 112 is configured to receive a wheeled mobile robot output signal from a wheeled mobile robot. The wheeled mobile robot output signal may be provided by sensors in or operationally connected to the wheeled mobile robot. The sensors may, for example, detect, with regard to a motion of the wheeled mobile robot, an orientation of a wheel, a change in the orientation of the wheel, a rotational speed of the wheel, a change in the rotational speed of the wheel, a direction of motion of the wheeled mobile robot, a change in the direction of motion of the wheeled mobile robot, a linear velocity of the wheeled mobile robot, a change in the linear velocity of the wheeled mobile robot, an angular velocity of the wheeled mobile robot, a change in the angular velocity of the wheeled mobile robot or a distance travelled by the wheeled mobile robot in a certain direction. The information detected by the sensors may be provided to the identifier 110 via the identifier signal receiver 112 through the wheeled mobile robot output signal.

The identifier signal receiver 112 may also be configured to receive a wheeled mobile robot input signal from the controller output signal refiner 130.

A wheel is a rotatable round object that may be used for moving a machine, such as a vehicle or a wheeled mobile robot. A track comprises a continuous belt around a plurality of rotatable wheels that may be used for moving a machine.

A wheeled mobile robot comprises at least one wheel or track, which may be orientable or fixed, for moving the wheeled mobile robot. A wheel or track is rotatable about a rotational axis in order to move the wheeled mobile robot. Hence, a fixed wheel or track is a wheel or track that may not be turned in any direction relative to the wheeled mobile robot except to rotate about its rotational axis. In addition, an orientable wheel or track is a wheel or track that may be turned by a non-zero angle to its rotational axis, or that may rotate about more than one rotational axis in order to move the wheeled mobile robot, such as an omnidirectional wheel or track. A drive wheel or track is a wheel or track that is configured to transmit force or torque from, for instance, a motor or an engine, to move the wheeled mobile robot. A trailer wheel or track is a wheel or track that is not configured to transmit force or torque from, for instance, a motor or an engine, to move the wheeled mobile robot.

Generally, there are five types of wheeled mobile robot. A wheeled mobile robot may be classified under any one of these five types of wheeled mobile robot. A type 1 wheeled mobile robot comprises two or more fixed drive wheels or tracks that are independently rotatable about parallel axes. For instance, a first wheel may independently rotate forwards whilst a second wheel rotates backwards. A type 1 wheeled mobile robot may comprise any number of trailer wheels or tracks. A type 2 wheeled mobile robot comprises three or more fixed drive wheels or tracks that are each independently rotatable about a respective rotational axis, wherein at least two of the rotational axes of two of the fixed drive wheels or tracks are not parallel. A type 2 wheeled mobile robot may comprise any number of trailer wheels or tracks. A type 3 wheeled mobile robot comprises an orientable drive wheel or track and any number of trailer wheels or tracks. A type 4 wheeled mobile robot comprises one or more orientable drive wheels or tracks that are independently rotatable about parallel axes. A type 4 wheeled mobile robot may comprise one or more trailer wheels or tracks. A type 5 wheeled mobile robot comprises two or more independently orientable drive wheels or tracks and any number of trailer wheels or tracks.

The wheeled mobile robot type identifier 114 is configured to identify whether a wheeled mobile robot is a type 1 wheeled mobile robot, a type 2 wheeled mobile robot, a type 3 wheeled mobile robot, a type 4 wheeled mobile robot or a type 5 wheeled mobile robot.

The wheeled mobile robot type identifier 114 may be configured to identify of which wheeled mobile robot type is a wheeled mobile robot, by taking into account at least one of a wheeled mobile robot output signal or the wheeled mobile robot input signal. The wheeled mobile robot type identifier 114 may be configured to identify of which wheeled mobile robot type is the wheeled mobile robot, by calculating a residual value using a residual function from information from the wheeled mobile robot output signal and the wheeled mobile robot input signal.

A residual function, $R_1(t)$, for a type 1 wheeled mobile robot is as follows:

$$R_1(t) = \ddot{Y} - \frac{\dot{v}_\mathrm{l}}{v_\mathrm{l}}\dot{Y} - jv_\mathrm{a}\dot{Y}$$

where $\dot{Y}$ is a first derivative of a wheeled mobile robot output, Y, with respect to time, t; $\ddot{Y}$ is a second derivative of the wheeled mobile robot output, Y, with respect to time, t; $v_\mathrm{l}$ is a linear velocity of the wheeled mobile robot; $\dot{v}_\mathrm{l}$ is a first derivative of $v_\mathrm{l}$ with respect to time, t; and $v_\mathrm{a}$ is an angular velocity of the wheeled mobile robot. If the residual value calculated using the residual function, $R_1(t)$, is 0, then a wheeled mobile robot may be identified as a type 1 wheeled mobile robot.

A residual function, $R_2(t)$, for a type 2 wheeled mobile robot is as follows:

$$R_2(t) = \ddot{Y} - \frac{\dot{v}_\mathrm{x} + j\dot{v}_\mathrm{y}}{v_\mathrm{x} + jv_\mathrm{y}}\dot{Y} - jv_\mathrm{a}\dot{Y}$$

where $\dot{Y}$ is a first derivative of a wheeled mobile robot output, Y, with respect to time, t; $\ddot{Y}$ is a second derivative of the wheeled mobile robot output, Y, with respect to time, t; $v_\mathrm{x}$ is a linear velocity of the wheeled mobile robot along an x-axis of the wheeled mobile robot; $\dot{v}_\mathrm{x}$ is a first derivative of $v_\mathrm{x}$ with respect to time, t; $v_\mathrm{y}$ is a linear velocity of a wheeled mobile robot along a y-axis of the wheeled mobile robot that is perpendicular to the x-axis; $\dot{v}_\mathrm{y}$ is a first derivative of $v_\mathrm{y}$ with respect to time, t; and $v_\mathrm{a}$ is an angular velocity of the wheeled mobile robot. If the residual value calculated using the residual function, $R_2(t)$, is 0, then a wheeled mobile robot may be identified as a type 2 wheeled mobile robot.

A residual function, $R_3(t)$, for a type 3 wheeled mobile robot is as follows:

$$R_3(t) = \ddot{Y} - \frac{\dot{v}_\mathrm{l}}{v_\mathrm{l}}\dot{Y} - j(v_\mathrm{a} + v_\mathrm{d})\dot{Y}$$

where $\dot{Y}$ is a first derivative of a wheeled mobile robot output, Y, with respect to time, t; $\ddot{Y}$ is a second derivative of the wheeled mobile robot output, Y, with respect to time, t; $v_\mathrm{l}$ is a linear velocity of the wheeled mobile robot; $\dot{v}_\mathrm{l}$ is a first derivative of $v_\mathrm{l}$ with respect to time, t; and $v_\mathrm{a}$ is an angular velocity of the wheeled mobile robot; $\dot{v}_\mathrm{x}$ is a first derivative of $v_\mathrm{x}$ with respect to time, t; and $v_\mathrm{d}$ is an angular velocity of a drive wheel of the wheeled mobile robot. If the residual value calculated using the residual function, $R_3(t)$, is 0, then a wheeled mobile robot may be identified as a type 3 wheeled mobile robot.

A residual function, $R_4(t)$, for a type 4 wheeled mobile robot is as follows:

$$R_4(t) = \ddot{Y} - \frac{\dot{v}_l}{v_l}\dot{Y} - \frac{v_d L cos\,(arg\dot{Y})\frac{d(arg\dot{Y})}{dt}}{Re(\dot{Y})}\dot{Y} + j\frac{d(arg\dot{Y})}{dt}\dot{Y}$$

where L is a wheelbase of the wheeled mobile robot; $\dot{Y}$ is a first derivative of a wheeled mobile robot output, Y, with respect to time, t; $\ddot{Y}$ is a second derivative of the wheeled mobile robot output, Y, with respect to time, , t; $v_l$ is a linear velocity of the wheeled mobile robot; $\dot{v}_l$ is a first derivative of $v_l$ with respect to time, t; and $v_d$ is an angular velocity of a drive wheel of the wheeled mobile robot. If the residual value calculated using the residual function, $R_4(t)$, is 0, then a wheeled mobile robot may be identified as a type 4 wheeled mobile robot.

If none of the residual values calculated using the residual equations, $R_1(t)$, $R_2(t)$, $R_3(t)$, $R_4(t)$, is 0, then a wheeled mobile robot may be identified as a type 5 wheeled mobile robot.

The wheeled mobile robot type identifier 114 may be configured to identify of which wheeled mobile robot type is a wheeled mobile robot, by calculating a residual value using an integral function of a residual function from information from a wheeled mobile robot output signal and a wheeled mobile robot input signal.

An integral function of a residual function, which may also be used to identify of which wheeled mobile robot type is a wheeled mobile robot, is as follows:

$$\int_T |R_i(t)|\,\mathrm{d}t$$

where i may be 1, 2, 3 or 4; t is time; and T is a specific period of time, for instance, 200 milliseconds or 300 milliseconds.

If the residual value calculated using the above integral function, where i is 1, is 0, then the wheeled mobile robot may be identified as a type 1 wheeled mobile robot. If the residual value calculated using the integral function, where i is 2, is 0, then the wheeled mobile robot may be identified as a type 2 wheeled mobile robot. If the residual value calculated using the integral function, where i is 3, is 0, then the wheeled mobile robot may be identified as a type 3 wheeled mobile robot. If the residual value calculated using the integral function, where i is 4, is 0, then the wheeled mobile robot may be identified as a type 4 wheeled mobile robot. Otherwise, the wheeled mobile robot may be identified as a type 5 wheeled mobile robot.

Thus, advantageously, the wheeled mobile robot controller compensation system 100 may identify of which wheeled mobile robot type, is a wheeled mobile robot.

The identifier signal emitter 116 is configured to emit a wheeled mobile robot type signal comprising information that corresponds to the wheeled mobile robot type of the wheeled mobile robot identified. The identifier signal emitter 116 may be configured to emit a wheeled mobile robot type signal to at least one of the compensator 120 or the controller output signal refiner 130.

The information that corresponds to a type 1 wheeled mobile robot, $\alpha_1$, which may be comprised in a wheeled mobile robot type signal, is as follows:

$$\alpha_1 = \begin{bmatrix} cos(q_x) & -sin(q_X) \\ sin(q_X) & cos(q_x) \end{bmatrix}$$

where $q_x$ is an orientation angle that a wheeled mobile robot body makes with an x-axis.

The information that corresponds to a type 2 wheeled mobile robot, $\alpha_2$, which may be comprised in a wheeled mobile robot type signal, is as follows:

$$\alpha_2 = \begin{bmatrix} cos(q_x) & -sin(q_X) & sin(q_X) + cos(q_x) \\ sin(q_X) & cos(q_x) & cos(q_x) - sin(q_x) \end{bmatrix}$$

where $q_x$ is an orientation angle that a wheeled mobile robot body makes with an x-axis.

The information that corresponds to a type 3 wheeled mobile robot, $\alpha_3$, which may be comprised in a wheeled mobile robot type signal, is as follows:

$$\alpha_3 = \begin{bmatrix} -sin(q_X + q_d) & -cos(q_X + q_d) & -cos(q_X + q_d) \\ cos(q_x + q_d) & -sin(q_X + q_d) & -sin(q_X + q_d) \end{bmatrix}$$

where $q_x$ is an orientation angle that a wheeled mobile robot body makes with an x-axis; and $q_d$ is an angle that a plane of a drive wheel makes with the wheeled mobile robot body.

The information that corresponds to a type 4 wheeled mobile robot, $\alpha_4$, which may be comprised in a wheeled mobile robot type signal, is as follows:

$$\alpha_4 = \begin{bmatrix} cos(q_x + q_d) & -sin(q_X + q_d) \\ sin(q_X + q_d) & cos(q_x + q_d) \end{bmatrix}$$

where $q_x$ is an orientation angle that a wheeled mobile robot body makes with an x-axis; and $q_d$ is an angle that a plane of a drive wheel makes with the wheeled mobile robot body.

The information that corresponds to a type 5 wheeled mobile robot, $\alpha_5$, which may be comprised in a wheeled mobile robot type signal, is as follows:

$$\alpha_5 = \begin{bmatrix} -s(q_{d1})s(q_X + q_{d2}) - s(q_{d2})s(q_X + q_{d1}) & -c(q_{d1})s(q_X + q_{d2}) - s(q_{d2})c(q_X + q_{d1}) & -s(q_{d1})c(q_X + q_{d2}) - c(q_{d2})s(q_X + q_{d1}) \\ s(q_{d1})c(q_X + q_{d2}) - c(q_{d2})s(q_X + q_{d1}) & c(q_{d2})c(q_X + q_{d2}) - s(q_{d2})s(q_X + q_{d1}) & -s(q_{d1})s(q_X + q_{d2}) - c(q_{d2})c(q_X + q_{d1}) \end{bmatrix}$$ where

s(*) represents sin(*); c(*) represents cos(*); $q_x$ is an orientation angle that a wheeled mobile robot body makes with an x-axis; and $q_{d1}$ and $q_{d2}$ are each an angle that a plane of a respective drive wheel makes with the wheeled mobile robot body.

The compensator 120 comprises a compensator signal receiver 122, a compensator signal determiner 124 and a compensator signal emitter 126.

The compensator signal receiver 122 is configured to receive a wheeled mobile robot input signal from the controller output signal refiner 130. In addition, the compensator signal receiver 122 may be configured to receive a wheeled mobile robot type signal from the identifier signal emitter 116.

The compensator signal receiver 122 may also be configured to receive a wheeled mobile robot output signal from a wheeled mobile robot. The wheeled mobile robot output signal may be provided by sensors in or operationally connected to the wheeled mobile robot. The sensors may, for example, detect, with regard to a motion of the wheeled mobile robot, an orientation of a wheel, a change in the orientation of the wheel, a rotational speed of the wheel, a change in the rotational speed of the wheel, a direction of motion of the wheeled mobile robot, a change in the direction of motion of the wheeled mobile robot, a linear velocity of the wheeled mobile robot, a change in the linear velocity of the wheeled mobile robot, an angular velocity of the wheeled mobile robot, a change in the angular velocity of the wheeled mobile robot or a distance travelled by the wheeled mobile robot in a certain direction. The information detected by the sensors may be provided to the compensator 120 via the compensator signal receiver 122 through the wheeled mobile robot output signal.

The compensator signal determiner 124 is configured to determine a controller output compensation signal, by taking into account at least one of a wheeled mobile robot input signal from the controller output signal refiner 130, a wheeled mobile robot type signal from the identifier signal emitter 116 or a wheeled mobile robot output signal from a wheeled mobile robot, in order to compensate for environmental and systemic effects affecting motion control of the wheeled mobile robot.

The compensator signal determiner 124 may be configured to determine a controller output compensation signal by subtracting an integral function of the wheeled mobile robot input signal from an integral function of the wheeled mobile robot output signal.

A compensation formula used to determine a controller output compensation signal in order to compensate for environmental and systemic effects affecting motion control of a wheeled mobile robot, if a wheeled mobile robot controller is used to control a wheel mobile robot to move according to a certain path profile, is as follows:

$$F = \frac{60}{T^2} \int_0^1 (6\delta^2 - 6\delta + 1)Y \, d\delta - 30\alpha_i \int_0^1 (1 - \delta)^2 \delta^2 u \, d\delta$$

where $\delta \in \textbf{[0,1]}$; $\delta$ is a data sample; T is a specific period of time, for instance, 200 milliseconds or 300 milliseconds; $\alpha_i$ is information that corresponds to a type i wheeled mobile robot, where i may be 1, 2, 3, 4 or 5; Y is a wheeled mobile robot output; and u is a wheeled mobile robot input.

A compensation formula used to determine a controller output compensation signal in order to compensate for environmental and systemic effects affecting motion control of a wheeled mobile robot, if a wheeled mobile robot controller is used to control a wheel mobile robot to move according to a certain speed profile, is as follows:

$$F = \frac{6}{T} \int_0^1 (2\delta - 1)Y \, \mathrm{d}\delta - 6\alpha_i \int_0^1 (\delta^2 - \delta)u \, \mathrm{d}\delta$$

where $\delta \in$ **[0,1]**; $\delta$ is a data sample; T is a specific period of time, for instance, 200 milliseconds or 300 milliseconds; $\alpha_i$ is information that corresponds to a type i wheeled mobile robot, where i may be 1, 2, 3, 4 or 5; Y is a wheeled mobile robot output; and u is a wheeled mobile robot input.

The compensation formulae may be used to help accurately determine a controller output compensation signal in order to effectively control the motion of a wheeled mobile robot. The compensation formulae may also be used to help determine a controller output compensation signal in order to compensate for environmental and systemic effects. In addition, the compensation formulae may be used to help determine an appropriate controller output compensation signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system 100 may thus be a plug-and-play wheeled mobile robot controller compensation system 100 suitable to be used with a wheeled mobile robot controller that has not been specifically tuned to control the motion of a wheeled mobile robot. The compensation formulae may further be used to help determine an appropriate controller output compensation signal that may be used to control the motion of a wheeled mobile robot, regardless of which wheeled mobile robot type is the wheeled mobile robot. The wheeled mobile robot controller compensation system 100 may thus be a plug-and-play wheeled mobile robot controller compensation system 100 suitable to be used with a wheeled mobile robot, regardless of which wheeled mobile robot type is the wheeled mobile robot.

The compensator signal emitter 126 is configured to emit a controller output compensation signal in order to refine a wheeled mobile robot controller output signal. The compensator signal emitter 126 is configured to emit a controller output compensation signal to the controller output signal refiner 130.

The controller output signal refiner 130 comprises a controller output signal refiner receiver 132, a controller output signal refiner determiner 134 and a controller output signal refiner emitter 136.

The controller output signal refiner receiver 132 is configured to receive at least one of a wheeled mobile robot controller output signal from a wheeled mobile robot controller, a controller output compensation signal from the compensator signal emitter 126 or a wheeled mobile robot type signal from the identifier signal emitter 116.

The controller output signal refiner determiner 134 is configured to determine a wheeled mobile robot input signal, by taking into account the at least one of a controller output compensation signal from the compensator signal emitter 126, a wheeled mobile robot type signal from the identifier signal emitter 116 or a wheeled mobile robot controller output signal from a wheeled mobile robot controller, in order to compensate for environmental and systemic effects affecting motion control of a wheeled mobile robot.

A refiner formula used to determine a wheeled mobile robot input signal in order to compensate for environmental and systemic effects affecting motion control of a wheeled mobile robot, is as follows:

$$u = \alpha^+(-F + C)$$

where u is a wheeled mobile robot input; $\alpha^+$ is an inverse matrix or a pseudo-inverse matrix of $\alpha_i$, which is information that corresponds to a type i wheeled mobile robot, where i may be 1, 2, 3, 4 or 5; F is a compensation formula used to determine a controller output compensation signal; and C is a wheeled mobile robot controller output from a wheeled mobile robot controller.

The refiner formula may be used to help accurately determine a wheeled mobile robot input signal in order to effectively control the motion of a wheeled mobile robot. The refiner formula may also be used to help determine a wheeled mobile robot input signal in order to compensate for environmental and systemic effects. In addition, the refiner formula may be used to help determine an appropriate wheeled mobile robot input signal to complement or refine a wheeled mobile robot controller output signal from a wheeled mobile robot controller, such that parameters of the wheeled mobile robot controller may not need to be tuned or adjusted in order to control the motion of a wheeled mobile robot. The wheeled mobile robot controller compensation system 100 may thus be a plug-and-play wheeled mobile robot controller compensation system 100 suitable to be used with a wheeled mobile robot controller that has not been specifically tuned to control the motion of a wheeled mobile robot. The refiner formula may further be used to help determine an appropriate wheeled mobile robot input signal that may be used to control the motion of a wheeled mobile robot, regardless of which wheeled mobile robot type is the wheeled mobile robot. The wheeled mobile robot controller compensation system 100 may thus be a plug-and-play wheeled mobile robot controller compensation system 100 suitable to be used with a wheeled mobile robot, regardless of which wheeled mobile robot type is the wheeled mobile robot.

The controller output signal refiner emitter 136 is configured to emit a wheeled mobile robot input signal to a wheeled mobile robot in order to control the motion of the wheeled mobile robot.

Figure 2 shows a wheeled mobile robot 140 comprising the wheeled mobile robot controller compensation system 100.

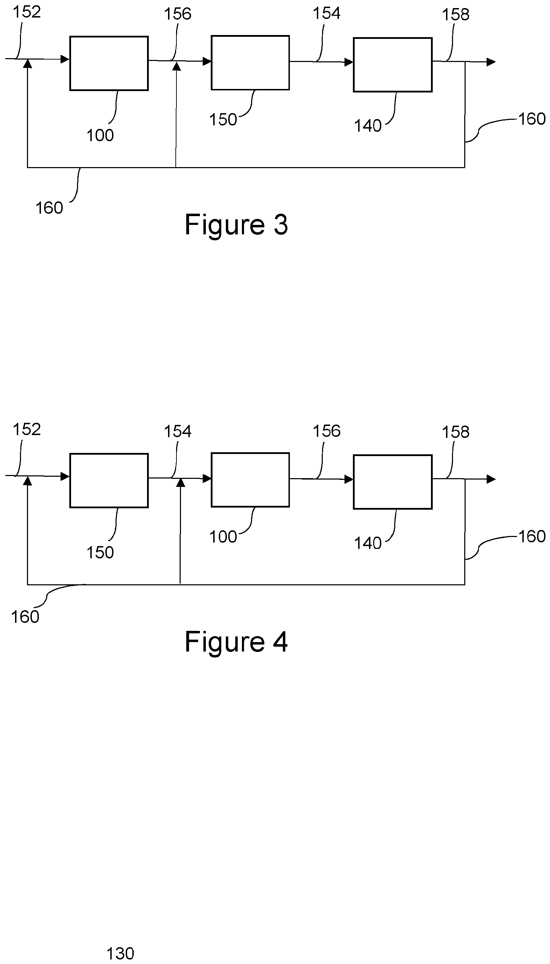

Figure 3 shows a schematic diagram of the wheeled mobile robot controller compensation system 100 operatively connected to the wheeled mobile robot 140 and a wheeled mobile robot controller 150.

A reference input signal 152 is provided to the wheeled mobile robot controller compensation system 100. The wheeled mobile robot controller compensation system 100 then emits a wheeled mobile robot input signal 156 to the wheeled mobile robot controller 150, for instance, a PID controller, a geometric controller, a kinematics controller, a fuzzy logic controller, a predictive model controller or an artificial intelligence controller. The wheeled mobile robot controller 150 emits a wheeled mobile robot controller output signal 154 to the wheeled mobile robot 140. A wheeled mobile robot output signal 158 is determined and fed back to the wheeled mobile robot controller compensation system 100 and wheeled mobile robot controller 150 the via a feedback loop 160.

Figure 4 shows another schematic diagram of the wheeled mobile robot controller compensation system 100 operatively connected to the wheeled mobile robot 140 and a wheeled mobile robot controller 150.

A reference input signal 152 is provided to the wheeled mobile robot controller 150, for instance, a PID controller, a geometric controller, a kinematics controller, a fuzzy logic controller, a predictive model controller or an artificial intelligence controller. The wheeled mobile robot controller 150 emits a wheeled mobile robot controller output signal 154 to the wheeled mobile robot controller compensation system 100. The wheeled mobile robot controller compensation system 100 then emits a wheeled mobile robot input signal 156 to the wheeled mobile robot 140. A wheeled mobile robot output signal 158 is determined and fed back to the wheeled mobile robot controller 150 and the wheeled mobile robot controller compensation system 100 via a feedback loop 160.

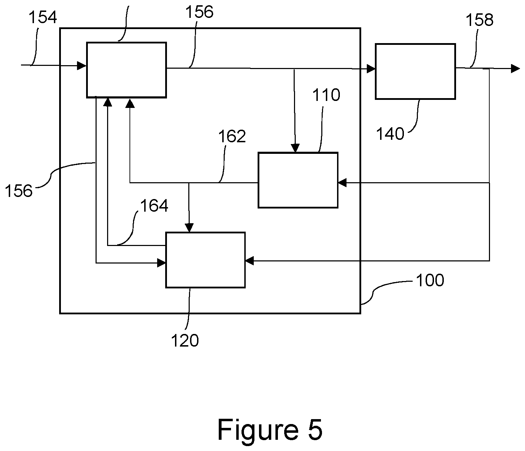

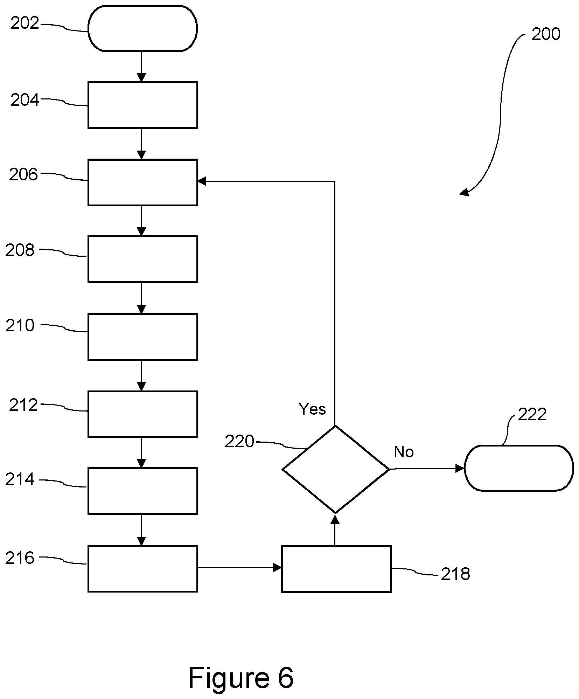

Figure 5 shows a schematic diagram of the wheeled mobile robot controller compensation system 100 operatively connected to the wheeled mobile robot 140, and Figure 6 shows a diagram for a wheeled mobile robot controller compensation method 200.

At step 202, the wheeled mobile robot controller compensation method 200 is started. At step 204, the wheeled mobile robot controller compensation system 100 is operatively connected to the wheeled mobile robot 140 and the wheeled mobile robot controller 150.

The wheeled mobile robot controller 150 is not tuned in order to control the wheeled mobile robot 140, because the wheeled mobile robot controller compensation system 100 is able to complement or refine a wheeled mobile robot controller output signal 154 from the wheeled mobile robot controller 150, such that parameters of the wheeled mobile robot controller 150 may not need to be tuned or adjusted in order to control the motion of a wheeled mobile robot 140. The wheeled mobile robot controller compensation system 100 is thus a plug-and-play wheeled mobile robot controller compensation system 100 suitable to be used with the wheeled mobile robot controller 150 even if it has not been specifically tuned to control the motion of the wheeled mobile robot 140.

The wheeled mobile robot 140 may be of any one of the five types of wheeled mobile robot, because the wheeled mobile robot controller compensation system 100 is able to determine an appropriate wheeled mobile robot input signal 156 that may be used to control the motion of the wheeled mobile robot 140, regardless of which wheeled mobile robot type is the wheeled mobile robot 140. The wheeled mobile robot controller compensation system 100 may thus be a plug-and-play wheeled mobile robot controller compensation system 100 suitable to be used with the wheeled mobile robot 140, regardless of which wheeled mobile robot type is the wheeled mobile robot 140.

At step 206, a reference input signal 152 is provided to the wheeled mobile robot controller 150. If the wheel mobile robot 140 is being controlled to move according to a certain path profile, the reference input signal 152 may comprise a path setpoint. If the wheel mobile robot 140 is being controlled to move according to a certain speed profile, the reference input signal 152 may comprise a speed setpoint. If the wheel mobile robot 140 is being controlled to move according to both a path profile and a speed profile, the reference input signal 152 may comprise both a path setpoint and a speed setpoint. If this is the first time a reference input signal 152 is provided to the wheeled mobile robot controller 150, for instance, after the wheeled mobile robot controller compensation system 100 is operatively connected to the wheeled mobile robot 140 and the wheeled mobile robot controller 150, the reference input signal 152 provided may also be a random reference input signal 152.

At step 208, the wheeled mobile robot controller 150 sends a wheeled mobile robot controller output signal 154 to the wheeled mobile robot controller compensation system 100. At step 210, the controller output signal refiner receiver 132 of the controller output signal refiner 130 receives the wheeled mobile robot controller output signal 154. The controller output signal refiner determiner 134 then determines a wheeled mobile robot input signal 156 by taking into account the wheeled mobile robot controller output signal 154. The controller output signal refiner determiner 134 may also take into account at least one of a wheeled mobile robot type signal 162 from the identifier 110 or a controller output compensation signal 164 from the compensator 120, in order to determine the wheeled mobile robot input signal 156.

A wheeled mobile robot type signal 162 from the identifier 110 comprises information, $\alpha_i$, that corresponds to the wheeled mobile robot type of the wheeled mobile robot 140. If this is the first time a controller output compensation signal 164 is determined, for instance, after the wheeled mobile robot controller compensation system 100 is operatively connected to the wheeled mobile robot 140 and the wheeled mobile robot controller 150, the wheeled mobile robot type signal 162 and the information, $\alpha_i$, that corresponds to the wheeled mobile robot type of the wheeled mobile robot 140 may be disregarded by the controller output signal refiner determiner 134.

A controller output compensation signal 164 comprises information, F, suitable to be used to compensate for environmental and systemic effects affecting motion control of the wheeled mobile robot 140. If this is the first time a controller output compensation signal 164 is determined, for instance, after the wheeled mobile robot controller compensation system 100 is operatively connected to the wheeled mobile robot 140 and the wheeled mobile robot controller 150, the controller output compensation signal 164 and the information, F, may be disregarded by the controller output signal refiner determiner 134.

At step 212, the controller output signal refiner 130 sends a wheeled mobile robot input signal 156 to the wheeled mobile robot 140, the identifier 110 and the compensator 120. At step 214, the wheeled mobile robot 140 moves in response to the wheeled mobile robot input signal 156, and the movement is detected by sensors in or operationally connected to the wheeled mobile robot 140. The information detected by the sensors is then provided to the identifier 110 and the compensator 120, and fed back to the wheeled mobile robot controller 150 through a wheeled mobile robot output signal 158.

At step 214, the identifier signal receiver 112 of the identifier 110 receives the wheeled mobile robot output signal 158 from the wheeled mobile robot 140 and the wheeled mobile robot input signal 156 from the controller output signal refiner 130. The wheeled mobile robot type identifier 114 identifies of which wheeled mobile robot type is a wheeled mobile robot 140, by taking into account at least one of the wheeled mobile robot output signal 158 or the wheeled mobile robot input signal 156. The wheeled mobile robot type identifier 114 may identify of which wheeled mobile robot type is a wheeled mobile robot 140, by calculating a residual value using a residual function from information from the wheeled mobile robot output signal 158 and the wheeled mobile robot input signal 156, or using an integral function of a residual function from information from the wheeled mobile robot output signal 158 and the wheeled mobile robot input signal 156.

At step 216, the identifier 110 sends a wheeled mobile robot type signal 162 comprising information that corresponds to the wheeled mobile robot type of the wheeled mobile robot 140 identified to the controller output signal refiner 130 and the compensator 120.

At step 218, the compensator signal receiver 122 of the compensator 120 receives the wheeled mobile robot type signal 162 from the identifier 110, the wheeled mobile robot output signal 158 from the wheeled mobile robot 140 and the wheeled mobile robot input signal 156 from the controller output signal refiner 130. The compensator signal determiner 124 determines a controller output compensation signal 164, by taking into account at least one of the wheeled mobile robot input signal 156 from the controller output signal refiner 130, the wheeled mobile robot type signal 162 from the identifier 110 or the wheeled mobile robot output signal 158 from the wheeled mobile robot 140, in order to compensate for environmental and systemic effects affecting motion control of the wheeled mobile robot 140. The compensator signal determiner 124 may determine the controller output compensation signal 164 by subtracting an integral function of the wheeled mobile robot input signal 156 from an integral function of the wheeled mobile robot output signal 158.

At step 220, it is checked whether there is a new reference input signal 152 available. If there is a new reference input signal 152, the wheeled mobile robot controller compensation method 200 loops back to step 206. Otherwise, the wheeled mobile robot controller compensation method 200 ends at step 222.

Hence, the wheeled mobile robot controller compensation system 100 may be used to help accurately determine a wheeled mobile robot input signal 156 or a controller output compensation signal 164 in order to effectively control the motion of the wheeled mobile robot 140. The wheeled mobile robot controller compensation system 100 may also be used to help determine a wheeled mobile robot input signal 156 or a controller output compensation signal 164 in order to compensate for environmental and systemic effects. In addition, the wheeled mobile robot controller compensation system 100 may be used to help determine an appropriate wheeled mobile robot input signal 156 or a controller output compensation signal 164 to complement or refine a wheeled mobile robot controller output signal 158 from the wheeled mobile robot controller 150, such that the parameters of the wheeled mobile robot controller 150 may not need to be tuned or adjusted in order to control the motion of the wheeled mobile robot 140. The wheeled mobile robot controller compensation system 100 may thus be a plug-and-play wheeled mobile robot controller compensation system 100 suitable to be used with the wheeled mobile robot controller 150 that has not been specifically tuned to control the motion of the wheeled mobile robot 140.

In addition, the wheeled mobile robot 140 may be of any one of the five types of wheeled mobile robot, because the wheeled mobile robot controller compensation system 100 is able to determine an appropriate wheeled mobile robot input signal 156 or a controller output compensation signal 164 that may be used to control the motion of the wheeled mobile robot 140, regardless of which wheeled mobile robot type is the wheeled mobile robot 140. The wheeled mobile robot controller compensation system 100 may thus be a plug-and-play wheeled mobile robot controller compensation system 100 suitable to be used with the wheeled mobile robot 140, regardless of which wheeled mobile robot type is the wheeled mobile robot 140.

For example, other suitable formulae may be provided to determine the controller output compensation signal 164 or the wheeled mobile robot input signal 156.

**Claims**

1. A wheeled mobile robot controller compensation system (100) comprising:
   a compensator signal receiver (122) configured to receive a wheeled mobile robot input signal (156) and further configured to receive a wheeled mobile robot output signal (158) from a wheeled mobile robot (140);

   an identifier signal emitter (116) configured to emit a wheeled mobile robot type signal (162) comprising information that corresponds to the wheeled mobile robot type of the wheeled mobile robot (140);
   a compensator signal determiner (124) configured to determine a controller output compensation signal (164), by taking into account the wheeled mobile robot input signal (156) received by the compensator signal receiver (122) and the wheeled mobile robot type signal (162), in order to compensate for environmental and systemic effects affecting motion control of the wheeled mobile robot (140); and
   a compensator signal emitter (126) configured to emit the controller output compensation signal (164) determined by the compensator signal determiner (124) in order to refine a wheeled mobile robot controller output signal (154),
   **characterised in that** the wheeled mobile robot controller compensation system further comprises a wheeled robot type identifier (114) configured to identify of which wheeled mobile robot type is the wheeled mobile robot (140), by taking into account the wheeled mobile robot output signal (158) and the wheeled mobile robot input signal (156) received by the compensator signal receiver (122).

2. The wheeled mobile robot controller compensation system (100) as in claim 1, wherein the compensator signal determiner (124) is configured to determine the controller output compensation signal (164), by also taking into account the wheeled mobile robot output signal (158), in order to compensate for environmental and systemic effects affecting motion control of the wheeled mobile robot (140).

3. The wheeled mobile robot controller compensation system (100) as in any one of claims 1-2, wherein the compensator signal determiner (124) is configured to determine the controller output compensation signal (164) using an equation comprising an integral function of the wheeled mobile robot output signal (158) .

4. The wheeled mobile robot controller compensation system (100) as in any one of claims 1-3, wherein the compensator signal determiner (124) is configured to determine the controller output compensation signal (164) using an equation comprising an integral function of the wheeled mobile robot input signal (156) received by the compensator signal receiver (122).

5. The wheeled mobile robot controller compensation system (100) as in any one of claims 1-2, wherein the compensator signal determiner (124) is configured to determine the controller output compensation signal (164) by subtracting an integral function of the wheeled mobile robot input signal (156) received by the compensator signal receiver (122) from an integral function of the wheeled mobile robot output signal (158) received by the compensator signal receiver (122).

6. The wheeled mobile robot controller compensation system (100) as in as any one of claims 1-5, wherein the wheeled mobile robot type identifier (114) is configured to identify of which wheeled mobile robot type is the wheeled mobile robot (140), by calculating a residual value using a residual function from information from the wheeled mobile robot output signal (158) and the wheeled mobile robot input signal (156) received by the compensator signal receiver (122).

7. The wheeled mobile robot controller compensation system (100) as in any one of claims 1-5, wherein the wheeled mobile robot type identifier (114) is configured to identify of which wheeled mobile robot type is the wheeled mobile robot (140), by calculating a residual value using an integral function of a residual function from information from the wheeled mobile robot output signal (158) and the wheeled mobile robot input signal (156) received by the compensator signal receiver (122).

8. The wheeled mobile robot controller compensation system (100) as in any one of claims 1-7, further comprising a controller output signal refiner determiner (134) configured to determine a wheeled mobile robot input signal (156), by taking into account the at least one of the controller output compensation signal (164) from the compensator signal emitter (126), the wheeled mobile robot type signal (162) from the identifier signal emitter (116) or the wheeled mobile robot controller output signal (154) from a wheeled mobile robot controller (150).

9. The wheeled mobile robot controller compensation system (100) as in any one of claims 1-7, further comprising a controller output signal refiner determiner (134) configured to determine a wheeled mobile robot input signal (156), by taking into account the controller output compensation signal (164) determined by the compensator signal determiner (124) from the compensator signal emitter (126), the wheeled mobile robot type signal (162) from the identifier signal emitter (116) and the wheeled mobile robot controller output signal (154) from a wheeled mobile robot controller (150).

10. A wheeled mobile robot (140) comprising the wheeled mobile robot controller compensation system (100) as in any one of the preceding claims.

11. A wheeled mobile robot controller compensation method comprising the acts of:

receiving a wheeled mobile robot input signal (156);
receiving a wheeled mobile robot output signal (158) from a wheeled mobile robot (140);
identifying of which wheeled mobile robot type is the wheeled mobile robot (140), by taking into account the wheeled mobile robot output signal (158) and the wheeled mobile robot input signal (156) received by a compensator signal receiver (122) ;
emitting a wheeled mobile robot type signal (162) comprising information that corresponds to the wheeled mobile robot type of the wheeled mobile robot (140) identified;
determining a controller output compensation signal (164), by taking into account the wheeled mobile robot input signal (156) received by the compensator signal receiver (122) and the wheeled mobile robot type signal (162), in order to compensate for environmental and systemic effects affecting motion control of the wheeled mobile robot (140); and
emitting the controller output compensation signal (164) determined by a compensator signal determiner (124) in order to refine a wheeled mobile robot controller output signal (154).

12. The wheeled mobile robot controller compensation method as in claim 11,

wherein the act of identifying of which wheeled mobile robot type is the wheeled mobile robot (140) comprises the act of:

calculating a residual value using a residual function from information from the wheeled mobile robot output signal (158) and the wheeled mobile robot input signal (156) received by the compensator signal receiver (122); or
calculating a residual value using an integral function of the residual function from the information from the wheeled mobile robot output signal (158) and the wheeled mobile robot input signal (156) received by the compensator signal receiver (122);

wherein the method further comprises the acts of:

determining the controller output compensation signal (164), by also taking into account the wheeled mobile robot output signal (158);
wherein the act of determining the controller output compensation signal (164) comprises the act of determining the controller output compensation signal (164) by subtracting an integral function of the wheeled mobile robot input signal (156) received by the compensator signal receiver (122) from an integral function of the wheeled mobile robot output signal (158); and
refining the wheeled mobile robot controller output signal (154), wherein the act of refining the wheeled mobile robot controller output signal (154) comprises the acts of:

determining the wheeled mobile robot input signal (156), by taking into account the controller output compensation signal (164) determined by the compensator signal determiner (124), the wheeled mobile robot type signal (162) and the wheeled mobile robot controller output signal (154), in order to compensate for environmental and systemic effects affecting motion control of the wheeled mobile robot (140); and

emitting the wheeled mobile robot input signal (156).

**Patentansprüche**

1. System (100) zur Kompensation der Steuerung eines mobilen Roboters auf Rädern, das Folgendes aufweist:

   einen Kompensatorsignalempfänger (122), der zum Empfangen eines Eingangssignals (156) eines mobilen Roboters auf Rädern ausgebildet ist und ferner zum Empfangen eines Ausgangssignals (158) eines mobilen Roboters auf Rädern von einem mobilen Roboter (140) auf Rädern ausgebildet ist;
   einen Kennungssignalemitter (116), der zum Emittieren eines Typsignals (162) eines mobilen Roboters auf Rädern ausgebildet ist, das Informationen aufweist, die dem Typ des mobilen Roboters auf Rädern des mobilen Roboters (140) auf Rädern entsprechen;
   einen Kompensatorsignalbestimmer (124), der zum Bestimmen eines Steuerungsausgangskompensationssignals (164) durch Berücksichtigen des Eingangssignals (156) des mobilen Roboters auf Rädern, das vom Kompensatorsignalempfänger (122) empfangen wird, und des Typsignals (162) des mobilen Roboters auf Rädern ausgebildet ist, um Umwelt- und systemische Auswirkungen zu kompensieren, die eine Bewegungssteuerung des mobilen Roboters (140) auf Rädern beeinträchtigen; und
   einen Kompensatorsignalemitter (126), der zum Emittieren des vom Kompensatorsignalbestimmer (124) bestimmten Steuerungsausgangskompensationssignals (164) ausgebildet ist, um ein Steuerungsausgangssignal (154) des mobilen Roboters auf Rädern zu verfeinern, **dadurch gekennzeichnet, dass** das System zur Kompensation der Steuerung des mobilen Roboters auf Rädern ferner eine Typkennung (114) eines Roboters auf Rädern aufweist, die zum Identifizieren, von welchem Typ eines mobilen Roboters auf Rädern der mobile Roboter (140) auf Rädern ist, durch Berücksichtigen des Ausgangssignals (158) des mobilen Roboters auf Rädern und des Eingangssignals (156) des mobilen Roboters auf Rädern, die vom Kompensatorsignalempfänger (122) empfangen werden, ausgebildet ist.

2. System (100) zur Kompensation der Steuerung eines mobilen Roboters auf Rädern nach Anspruch 1, wobei der Kompensatorsignalbestimmer (124) zum Bestimmen des Steuerungsausgangskompensationssignals (164) durch gleichzeitiges Berücksichtigen des Ausgangssignals (158) des mobilen Roboters auf Rädern ausgebildet ist, um Umwelt- und systemische Auswirkungen zu kompensieren, die eine Bewegungssteuerung des mobilen Roboters (140) auf Rädern beeinträchtigen.

3. System (100) zur Kompensation der Steuerung eines mobilen Roboters auf Rädern nach einem der Ansprüche 1-2, wobei der Kompensatorsignalbestimmer (124) zum Bestimmen des Steuerungsausgangskompensationssignals (164) unter Verwendung einer Gleichung ausgebildet ist, die eine integrale Funktion des Ausgangssignals (158) des mobilen Roboters auf Rädern aufweist.

4. System (100) zur Kompensation der Steuerung eines mobilen Roboters auf Rädern nach einem der Ansprüche 1-3, wobei der Kompensatorsignalbestimmer (124) zum Bestimmen des Steuerungsausgangskompensationssignals (164) unter Verwendung einer Gleichung ausgebildet ist, die eine integrale Funktion des vom Kompensatorsignalempfänger (122) empfangenen Eingangssignals (156) des mobilen Roboters auf Rädern aufweist.

5. System (100) zur Kompensation der Steuerung eines mobilen Roboters auf Rädern nach einem der Ansprüche 1-2, wobei der Kompensatorsignalbestimmer (124) zum Bestimmen des Steuerungsausgangskompensationssignals (164) durch Subtrahieren einer integralen Funktion des Eingangssignals (156) des mobilen Roboters auf Rädern, das vom Kompensatorsignalempfänger (122) empfangen wird, von einer integralen Funktion des Ausgangssignals (158) des mobilen Roboters auf Rädern, das vom Kompensatorsignalempfänger (122) empfangen wird, ausgebildet ist.

6. System (100) zur Kompensation der Steuerung eines mobilen Roboters auf Rädern nach einem wie der Ansprüche 1-5, wobei die Typkennung (114) des mobilen Roboters auf Rädern zum Identifizieren, von welchem Typ des mobilen Roboters auf Rädern der mobile Roboter (140) auf Rädern ist, durch Berechnen eines Restwertes unter Verwendung einer Restfunktion aus Informationen vom Ausgangssignal (158) des mobilen Roboters auf Rädern und vom Eingangssignal (156) des mobilen Roboters auf Rädern, die vom Kompensatorsignalempfänger (122) empfangen werden, ausgebildet ist.

7. System (100) zur Kompensation der Steuerung eines mobilen Roboters auf Rädern nach einem der Ansprüche 1-5, wobei die Typkennung (114) des mobilen Roboters auf Rädern zum Identifizieren, von welchem Typ des mobilen Roboters auf Rädern der mobile Roboter (140) auf Rädern ist, durch Berechnen eines Restwertes unter Verwendung einer integralen Funktion einer Restfunktion aus Informationen vom Ausgangssignal (158) des mobilen Roboters auf Rädern und vom Eingangssignal (156) des mobilen Roboters auf Rädern, die vom Kompensatorsignalempfänger (122) empfangen werden, ausgebildet ist.

8. System (100) zur Kompensation der Steuerung eines mobilen Roboters auf Rädern nach einem der Ansprüche 1-7, das ferner einen Steuerungsausgangssignalverfeinerungsbestimmer (134) aufweist, der zum Bestimmen eines Eingangssignals (156) eines mobilen Roboters auf Rädern durch Berücksichtigen des mindestens einen des Steuerungsausgangskompensationssignals (164) vom Kompensatorsignalemitter (126), des Typsignals (162) des mobilen Roboters auf Rädern vom Kennungssignalemitter (116) oder des Steuerungsausgangssignals (154) des mobilen Roboters auf Rädern von einer Steuerung (150) eines mobilen Roboters auf Rädern ausgebildet ist.

9. System (100) zur Kompensation der Steuerung eines mobilen Roboters auf Rädern nach einem der Ansprüche 1-7, das ferner einen Steuerungsausgangssignalverfeinerungsbestimmer (134) aufweist, der zum Bestimmen eines Eingangssignals (156) eines mobilen Roboters auf Rädern durch Berücksichtigen des vom Kompensatorsignalbestimmer (124) bestimmten Steuerungsausgangskompensationssignals (164) vom Kompensatorsignalemitter (126), des Typsignals (162) des mobilen Roboters auf Rädern vom Kennungssignalemitter (116) und des Steuerungsausgangssignals (154) des mobilen Roboters auf Rädern von einer Steuerung (150) eines mobilen Roboters auf Rädern ausgebildet ist.

10. Mobiler Roboter (140) auf Rädern, der das System (100) zur Kompensation der Steuerung eines mobilen Roboters auf Rädern nach einem der vorhergehenden Ansprüche aufweist.

11. Verfahren zur Kompensation der Steuerung eines mobilen Roboters auf Rädern, das die folgenden Maßnahmen aufweist:

Empfangen eines Eingangssignals (156) eines mobilen Roboters auf Rädern;
Empfangen eines Ausgangssignals (158) eines mobilen Roboters auf Rädern von einem mobilen Roboter (140) auf Rädern;
Identifizieren, von welchem Typ eines mobilen Roboters auf Rädern der mobile Roboter (140) auf Rädern ist, durch Berücksichtigen des Ausgangssignals (158) des mobilen Roboters auf Rädern und des Eingangssignals (156) des mobilen Roboters auf Rädern, die von einem Kompensatorsignalempfänger (122) empfangen werden;
Emittieren eines Typsignals (162) eines mobilen Roboters auf Rädern, das Informationen aufweist, die dem Typ eines mobilen Roboters auf Rädern des mobilen Roboters (140) auf Rädern entsprechen;
Bestimmen eines Steuerungsausgangskompensationssignals (164) durch Berücksichtigen des Eingangssignals (156) des mobilen Roboters auf Rädern, das vom Kompensatorsignalempfänger (122) empfangen wird, und des Typsignals (162) des mobilen Roboters auf Rädern, um Umwelt- und systemische Auswirkungen zu kompensieren, die eine Bewegungssteuerung des mobilen Roboters (140) auf Rädern beeinträchtigen; und
Emittieren des von einem Kompensatorsignalbestimmer (124) bestimmten Steuerungsausgangskompensationssignals (164), um ein Steuerungsausgangssignal (154) des mobilen Roboters auf Rädern zu verfeinern.

12. Verfahren zur Kompensation der Steuerung eines mobilen Roboters auf Rädern nach Anspruch 11, wobei die Maßnahme des Identifizierens, von welchem Typ eines mobilen Roboters auf Rädern der mobile Roboter (140) auf Rädern ist, die folgende Maßnahme aufweist:

Berechnen eines Restwertes unter Verwendung einer Restfunktion aus Informationen vom Ausgangssignal (158) des mobilen Roboters auf Rädern und vom Eingangssignal (156) des mobilen Roboters auf Rädern, die vom Kompensatorsignalempfänger (122) empfangen werden; oder
Berechnen eines Restwertes unter Verwendung einer integralen Funktion der Restfunktion aus den Informationen vom Ausgangssignal (158) des mobilen Roboters auf Rädern und vom Eingangssignal (156) des mobilen Roboters auf Rädern, die vom Kompensatorsignalempfänger (122) empfangen werden;
wobei das Verfahren ferner die folgenden Maßnahmen aufweist:

Bestimmen des Steuerungsausgangskompensationssignals (164) durch gleichzeitiges Berücksichtigen des Ausgangssignals (158) des mobilen Roboters auf Rädern;

wobei die Maßnahme des Bestimmens des Steuerungsausgangskompensationssignals (164) die Maßnahme des Bestimmens des Steuerungsausgangskompensationssignals (164) durch Subtrahieren einer integralen Funktion des Eingangssignals (156) des mobilen Roboters auf Rädern, das vom Kompensatorsignalempfänger (122) empfangen wird, von einer integralen Funktion des Ausgangssignals (158) des mobilen Roboters auf Rädern aufweist und

Verfeinern des Steuerungsausgangssignals (154) des mobilen Roboters auf Rädern, wobei die Maßnahme des Verfeinerns des Steuerungsausgangssignals (154) die folgenden Maßnahmen aufweist:

Bestimmen des Eingangssignals (156) des mobilen Roboters auf Rädern durch Berücksichtigen des Steuerungsausgangskompensationssignals (164), das durch den Kompensatorsignalbestimmer (124) bestimmt wird, des Typsignals (162) des mobilen Roboters auf Rädern und des Steuerungsausgangssignals (154) des mobilen Roboters auf Rädern, um Umwelt- und systemische Auswirkungen zu kompensieren, die eine Bewegungssteuerung des mobilen Roboters (140) auf Rädern beeinträchtigen; und Emittieren des Eingangssignals (156) eines mobilen Roboters auf Rädern.

**Revendications**

1. Système de compensation de dispositif de commande de robot mobile à roues (100) comprenant :

un récepteur de signal de compensateur (122) configuré pour recevoir un signal d'entrée de robot mobile à roues (156) et configuré en outre pour recevoir un signal de sortie de robot mobile à roues (158) provenant d'un robot mobile à roues (140) ;
un émetteur de signal d'identifiant (116) configuré pour émettre un signal de type de robot mobile à roues (162) comprenant des informations qui correspondent au type de robot mobile à roues du robot mobile à roues (140) ;
un dispositif de détermination de signal de compensateur (124) configuré pour déterminer un signal de compensation de sortie de dispositif de commande (164), en tenant compte du signal d'entrée de robot mobile à roues (156) reçu par le récepteur de signal de compensateur (122) et du signal de type de robot mobile à roues (162), afin de compenser des effets environnementaux et systémiques affectant la commande de mouvement du robot mobile à roues (140) ; et
un émetteur de signal de compensateur (126) configuré pour émettre le signal de compensation de sortie de dispositif de commande (164) déterminé par le dispositif de détermination de signal de compensateur (124) afin d'affiner un signal de sortie de dispositif de commande de robot mobile à roues (154),
**caractérisé en ce que** le système de compensation de dispositif de commande de robot mobile à roues comprend en outre un identifiant de type de robot à roues (114) configuré pour identifier de que type de robot mobile à roues est le robot mobile à roues (140), en tenant compte du signal de sortie de robot mobile à roues (158) et du signal d'entrée de robot mobile à roues (156) reçus par le récepteur de signal de compensateur (122).

2. Système de compensation de dispositif de commande de robot mobile à roues (100) selon la revendication 1, dans lequel le dispositif de détermination de signal de compensateur (124) est configuré pour déterminer le signal de compensation de sortie de dispositif de commande (164), en tenant également compte du signal de sortie de robot mobile à roues (158), afin de compenser des effets environnementaux et systémiques affectant la commande de mouvement du robot mobile à roues (140).

3. Système de compensation de dispositif de commande de robot mobile à roues (100) selon l'une quelconque des revendications 1 à 2, dans lequel le dispositif de détermination de signal de compensateur (124) est configuré pour déterminer le signal de compensation de sortie de dispositif de commande (164) à l'aide d'une équation comprenant une fonction intégrale du signal de sortie de robot mobile à roues (158).

4. Système de compensation de dispositif de commande de robot mobile à roues (100) selon l'une quelconque des revendications 1 à 3, dans lequel le dispositif de détermination de signal de compensateur (124) est configuré pour déterminer le signal de compensation de sortie de dispositif de commande (164) à l'aide d'une équation comprenant une fonction intégrale du signal d'entrée de robot mobile à roues (156) reçu par le récepteur de signal de compensateur (122).

5. Système de compensation de dispositif de commande de robot mobile à roues (100) selon l'une quelconque des revendications 1 à 2, dans lequel le dispositif de détermination de signal de compensateur (124) est configuré pour déterminer le signal de compensation de sortie de dispositif de commande (164) en soustrayant une fonction intégrale du signal d'entrée de robot mobile à roues (156) reçu par le récepteur de signal de compensateur (122) d'une fonction intégrale du signal de sortie de robot mobile à roues (158) reçu par le récepteur de signal de compensateur (122).

6. Système de compensation de dispositif de commande de robot mobile à roues (100) selon l'une quelconque des revendications 1 à 5, dans lequel l'identifiant de type de robot mobile à roues (114) est configuré pour identifier de quel type de robot mobile à roues est le robot mobile à roues (140), en calculant une valeur résiduelle à l'aide d'une fonction résiduelle à partir d'informations provenant du signal de sortie de robot mobile à roues (158) et du signal d'entrée de robot mobile à roues (156) reçus par le récepteur de signal de compensateur (122).

7. Système de compensation de dispositif de commande de robot mobile à roues (100) selon l'une quelconque des revendications 1 à 5, dans lequel l'identifiant de type de robot mobile à roues (114) est configuré pour identifier de quel type de robot mobile à roues est le robot mobile à roues (140), en calculant une valeur résiduelle à l'aide d'une fonction intégrale d'une fonction résiduelle à partir d'informations provenant du signal de sortie de robot mobile à roues (158) et du signal d'entrée de robot mobile à roues (156) reçus par le récepteur de signal de compensateur (122).

8. Système de compensation de dispositif de commande de robot mobile à roues (100) selon l'une quelconque des revendications 1 à 7, comprenant en outre un dispositif de détermination d'affineur de signal de sortie de dispositif de commande (134) configuré pour déterminer un signal d'entrée de robot mobile à roues (156), en tenant compte de l'au moins un du signal de compensation de sortie de dispositif de commande (164) provenant de l'émetteur de signal de compensateur (126), du signal de type de robot mobile à roues (162) provenant de l'émetteur de signal d'identifiant (116) ou du signal de sortie de dispositif de commande de robot mobile à roues (154) provenant d'un dispositif de commande de robot mobile à roues (150).

9. Système de compensation de dispositif de commande de robot mobile à roues (100) selon l'une quelconque des revendications 1 à 7, comprenant en outre un dispositif de détermination d'affineur de signal de sortie de dispositif de commande (134) configuré pour déterminer un signal d'entrée de robot mobile à roues (156), en tenant compte du signal de compensation de sortie de dispositif de commande (164) déterminé par le dispositif de détermination de signal de compensateur (124) provenant de l'émetteur de signal de compensateur (126), du signal de type de robot mobile à roues (162) provenant de l'émetteur de signal d'identifiant (116) et du signal de sortie de dispositif de commande de robot mobile à roues (154) provenant d'un dispositif de commande de robot mobile à roues (150).

10. Robot mobile à roues (140) comprenant le système de compensation de dispositif de commande de robot mobile à roues (100) selon l'une quelconque des revendications précédentes.

11. Procédé de compensation de dispositif de commande de robot mobile à roues comprenant les étapes de :

réception d'un signal d'entrée de robot mobile à roues (156) ;
réception d'un signal de sortie de robot mobile à roues (158) provenant d'un robot mobile à roues (140) ;
identification de quel type de robot mobile à roues est le robot mobile à roues (140), en tenant compte du signal de sortie de robot mobile à roues (158) et du signal d'entrée de robot mobile à roues (156) reçus par un récepteur de signal de compensateur (122) ;
émission d'un signal de type de robot mobile à roues (162) comprenant des informations qui correspondent au type de robot mobile à roues du robot mobile à roues (140) identifié ;
détermination d'un signal de compensation de sortie de dispositif de commande (164), en tenant compte du signal d'entrée de robot mobile à roues (156) reçu par le récepteur de signal de compensateur (122) et du signal de type de robot mobile à roues (162), afin de compenser des effets environnementaux et systémiques affectant la commande de mouvement du robot mobile à roues (140) ; et
émission du signal de compensation de sortie de dispositif de commande (164) déterminé par un dispositif de détermination de signal de compensateur (124) afin d'affiner un signal de sortie de dispositif de commande de robot mobile à roues (154).

12. Procédé de compensation de dispositif de commande de robot mobile à roues selon la revendication 11, dans lequel l'étape d'identification de quel type de robot mobile à roues est le robot mobile à roues (140) comprend les étapes de :

calcul d'une valeur résiduelle à l'aide d'une fonction résiduelle à partir d'informations provenant du signal de sortie de robot mobile à roues (158) et du signal d'entrée de robot mobile à roues (156) reçus par le récepteur de signal de compensateur (122) ; ou

calcul d'une valeur résiduelle à l'aide d'une fonction intégrale de la fonction résiduelle à partir des informations provenant du signal de sortie de robot mobile à roues (158) et du signal d'entrée de robot mobile à roues (156) reçus par le récepteur de signal de compensateur (122) ;

dans lequel le procédé comprend en outre les étapes de :

détermination du signal de compensation de sortie de dispositif de commande (164), en tenant également compte du signal de sortie de robot mobile à roues (158) ;

dans lequel l'étape de détermination du signal de compensation de sortie de dispositif de commande (164) comprend l'étape de détermination du signal de compensation de sortie de dispositif de commande (164) en soustrayant une fonction intégrale du signal d'entrée de robot mobile à roues (156) reçu par le récepteur de signal de compensateur (122) d'une fonction intégrale du signal de sortie de robot mobile à roues (158) ; et

affinage du signal de sortie de dispositif de commande de robot mobile à roues (154), dans lequel l'étape d'affinage du signal de sortie de dispositif de commande de robot mobile à roues (154) comprend les étapes de :

détermination du signal d'entrée de robot mobile à roues (156), en tenant compte du signal de compensation de sortie de dispositif de commande (164) déterminé par le dispositif de détermination de signal de compensateur (124), du signal de type de robot mobile à roues (162) et du signal de sortie de dispositif de commande de robot mobile à roues (154), afin de compenser des effets environnementaux et systémiques affectant la commande de mouvement du robot mobile à roues (140) ; et

émission du signal d'entrée de robot mobile à roues (156).

Figure 1

Figure 2

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018088582 A1
- US 4718685 A
- US 2007213902 A1